# EUROPEAN PATENT APPLICATION

(11) **EP 4 052 964 A1**
(43) Date of publication of application: **07.09.2022**
(21) Application number: 20881135.6
(22) Date of filing: 15.09.2020
(51) Int. Cl.: B60Q 3/283, B60Q 3/80, B60R 21/203

(54) **STEERING WHEEL ASSEMBLY**

(30) Priority: 30.10.2019 CN 201921839036 U
(71) Applicant: Autoliv Development AB, 44783 Vargarda (SE)
(72) Inventor: SANG, Ruigang, Shanghai 201807 (CN); LIANG, Mingfei, Shanghai 201807 (CN); LU, Xiaoshan, Shanghai 201807 (CN)
(74) Representative: Novagraaf International SA
(86) International application number: PCT/CN2020/115392
(87) International publication number: WO 2021/082778

(57) **Abstract**

A steering wheel assembly (100), comprising: a steering wheel base plate; a safety airbag, located on the steering wheel base plate and comprising a cover (10) and a housing (20), wherein the cover (10) and the housing (20) define a space for accommodating an airbag of the safety airbag; and a light-emitting mark (30), capable of emitting light when powered on. The light-emitting mark (30) includes an electronic control element (301), a mark portion (303), and a flexible circuit board (302). The electronic control element (301) is configured to be based on a rigid printed circuit board. The flexible circuit board (302) is configured to have a first end connected to the electronic control element (301) and a second end connected to the mark portion (303) so that the electronic control element (301) controls light emission of the mark portion (303) by means of the flexible circuit board (302). The electronic control element (301) is arranged in a first position in the steering wheel assembly (100). The mark portion (303) is arranged in a second position in the steering wheel assembly (100). The second position is positioned at the cover (10). The first position and the second position are spaced apart from each other by a distance.

## Description

### TECHNICAL FIELD

The present invention relates to automobile parts, in particular to a steering wheel assembly.

### BACKGROUND

In a steering wheel assembly of an existing automobile, a light-emitting mark for identifying a product thereof is used. These light-emitting marks may include marking features such as a simple geometric figure, a letter, a dash, or a combination thereof. An electroluminescent element made of a electroluminescent material in the light-emitting mark is capable of emitting light when powered on to illuminate the aforementioned marking features. A light-emitting mark mounted in the interior of the automobile is generally placed in a central region of the steering wheel.

During deployment of a safety airbag of the steering wheel assembly, the light-emitting mark encounters a great impact caused by rapid deployment of the safety airbag, so that an element of the light-emitting mark may be displaced relative to an original fixed position thereof due to the impact encountered (this may hurt a driver), thereby affecting the safety, operation performance, and a service life of the steering wheel assembly.

Therefore, a steering wheel assembly having good safety and operation performance and a long service life is desired.

### SUMMARY

The objective of the present invention is to provide a steering wheel assembly having good safety and operation performance and a long service life.

The present invention provides a steering wheel assembly, comprising:
a steering wheel base plate;
a safety airbag, located on the steering wheel base plate and comprising a cover and a housing, wherein the cover and the housing define a space for accommodating an airbag of the safety airbag; and
a light-emitting mark, capable of emitting light when powered on,
wherein the light-emitting mark comprises an electronic control element, a mark portion, and a flexible circuit board, the electronic control element being configured to be based on a rigid printed circuit board, the flexible circuit board being configured to have a first end connected to the electronic control element and a second end connected to the mark portion so that the electronic control element controls light emission of the mark portion by means of the flexible circuit board, and
the electronic control element being arranged in a first position in the steering wheel assembly, the mark portion being arranged in a second position in the steering wheel assembly, the second position being positioned at the cover, and the first position and the second position being spaced apart from each other by a distance.

According to an embodiment of the present invention, the first position is positioned on one of the housing, the cover, or the steering wheel base plate.

According to an embodiment of the present invention, the first position is positioned at a bottom surface of an outer side of the housing, or is positioned at an outer side surface of the cover.

According to an embodiment of the present invention, an outer side of the electronic control element is further provided with a dust cover.

According to an embodiment of the present invention, the mark portion comprises a light guide plate and a light emitting plate, wherein the light guide plate is configured to be used to uniformly emit, by means of the light emitting plate, light entering the light guide plate outwards.

According to an embodiment of the present invention, the flexible circuit board is provided with a light-emitting diode, and a section of the flexible circuit board on which the light-emitting diode is provided is arranged on a side surface of the light guide plate so as to cause light emitted by the light-emitting diode to enter the light guide plate.

According to an embodiment of the present invention, the flexible circuit board is configured to be adhered to the cover.

According to an embodiment of the present invention, the electronic control element controls one or more of a time, color, and intensity of light emission of the mark portion by means of the flexible circuit board.

According to an embodiment of the present invention, a surface of the light emitting plate of the mark portion is configured to have one or more of a designed shape, pattern, and text.

### BRIEF DESCRIPTION OF THE DRAWINGS

FIG. 1 shows a schematic diagram of a steering wheel assembly according to an embodiment of the present invention.
FIG. 2 shows a schematic diagram of a steering wheel assembly according to another embodiment of the present invention.

### DETAILED DESCRIPTION

Specific embodiments of a steering wheel assembly according to the present invention will be described below with reference to the accompanying drawings. The following detailed description and the accompanying drawings are used to illustratively explain the principles of the present invention. The present invention is not limited to the described preferred embodiments, and the protection scope of the present invention is defined by the claims.

In addition, terms for spatial relations (such as "upper", "lower", "left", "right", etc.) are used to describe a relative positional relationship between an element and another element shown in the accompanying drawings. Therefore, when used, the terms for spatial relations may be applied to directions different from those shown in the accompanying drawings. Obviously, although all of these terms for spatial relations refer to the directions shown in the accompanying drawings for ease of explanation, a person skilled in the art will appreciate that directions different from those shown in the drawings may be used.

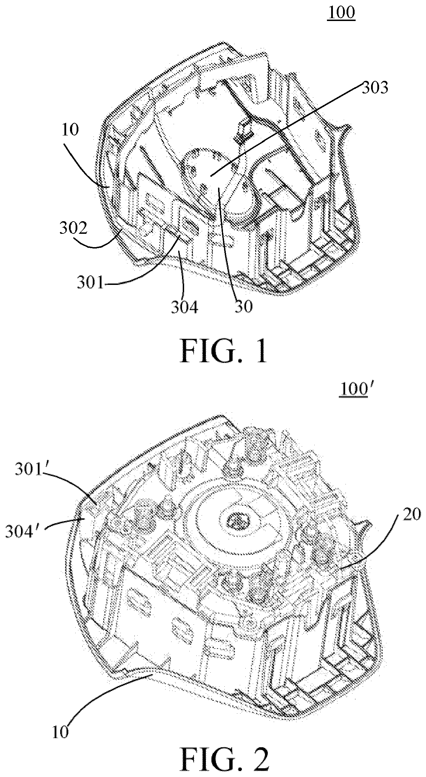

FIG. 1 shows a schematic diagram of the steering wheel assembly according to an embodiment of the present invention. The steering wheel assembly according to an embodiment of the present invention is described below with reference to FIG. 1.

As shown in FIG. 1, a steering wheel assembly 100 according to an embodiment of the present invention includes a cover 10 of a safety airbag. In addition, the steering wheel assembly 100 further includes a housing (not shown in FIG. 1, reference may be made to the housing 20 shown in FIG. 2). The cover 10 and the housing define a space for accommodating an airbag (not shown) of the safety airbag. In addition, the safety airbag is located on a steering wheel base plate (not shown) of the steering wheel assembly 100.

Continuing to refer to FIG. 1, the steering wheel assembly 100 further includes a light-emitting mark 30, and the light-emitting mark 30 can emit light when powered on. Specifically, the light-emitting mark 30 comprises an electronic control element 301, a mark portion 303, and a flexible circuit board 302. Wherein the electronic control element 301 is configured to be based on a rigid printed circuit board. The flexible circuit board 302 is configured to have a first end connected to the electronic control element 301 and a second end connected to the mark portion 303 so that the electronic control element 301 controls light emission of the mark portion 303 by means of the flexible circuit board 302. In addition, an outer side of the electronic control element 301 is further provided with a dust cover 304 to prevent the electronic control element 301 from being contaminated and therefore having affected performance.

In the embodiment shown in FIG. 1, the mark portion 303 is arranged in a central region of an inner surface of the cover 10, and in addition, the electronic control element 301 is arranged on an outer side surface of a left side wall of the cover 10. It should be noted that in the present invention, the space defined by the cover 10 and the housing is referred to as an internal space of the safety airbag. A surface of a component of the steering wheel assembly located in this internal space is considered to be located on an inner side surface, and otherwise a surface of the component of the steering wheel assembly is considered to be located on an outer side surface.

Therefore, in the steering wheel assembly 100 according to an embodiment of the present invention shown in FIG. 1, the electronic control element 301 and the mark portion 303 are spaced apart from each other by a distance. During deployment of the safety airbag of the steering wheel assembly 100, since the electronic control element 301 of the light-emitting mark 30 is arranged in a position located away from the mark portion 303 by a distance, the mark portion 303 itself is light-weight. In this case, when the mark portion 303 encounters a great impact caused by rapid deployment of the safety airbag, since the mark portion 303 is light-weight, the mark portion 303 has low inertia, and therefore the risk that the mark portion 303 of the light-emitting mark 30 is displaced relative to an original fixed position thereof due to the impact encountered is low.

Therefore, the steering wheel assembly according to the present invention has good safety and operation performance and a long service life.

FIG. 2 shows a schematic diagram of the steering wheel assembly according to another embodiment of the present invention. The steering wheel assembly according to another embodiment of the present invention is described below with reference to FIG. 2. It should be noted that the embodiment shown in FIG. 2 is basically the same as the embodiment shown in FIG. 1, and the difference is mainly in respect of an arrangement position of the electronic control element in the light-emitting mark. In order to avoid repetition, only the difference from the embodiment in FIG. 1 is described below.

As shown in FIG. 2, in a steering wheel assembly 100' according to an embodiment of the present invention, a mark portion (not shown) is also arranged in a central region of an inner surface of a cover 10. In addition, an electronic control element 301' is arranged near an outer side surface of an upper side wall of the cover 10, so that the electronic control element 301' and the mark portion are spaced apart from each other by a distance. Similarly, an outer side of the electronic control element 301' is further provided with a dust cover 304' to prevent the electronic control element 301' from being contaminated and therefore having affected performance.

In the steering wheel assembly according to the present invention, the arrangement position of the electronic control element of the light-emitting mark is not limited to the above embodiments. Under the condition that a first position where the electronic control element is located and a second position where the mark portion is located are spaced apart from each other by a distance, then the electronic control element may also be arranged in another position in the steering wheel assembly, such as on a bottom surface of an outer side of the housing 20 (namely an upper surface of the housing 20 in FIG. 2), on an outer surface of a right side wall of the cover 10, or on the steering wheel base plate.

As a preferred embodiment of the present invention, the electronic control element controls one or more of a time, color, and intensity of light emission of the mark portion by means of the flexible circuit board. As another preferred embodiment of the present invention, the mark portion comprises a light guide plate and a light emitting plate (neither of the two are shown), and in addition, the light guide plate is configured to be used to uniformly emit, by means of the light emitting plate, light entering the light guide plate outwards. As another preferred embodiment of the present invention, the flexible circuit board is provided with a light-emitting diode, and in addition, a section of the flexible circuit board on which the light-emitting diode is provided is arranged on a side surface of the light guide plate so as to cause light emitted by the light-emitting diode to enter the light guide plate. As a preferred embodiment of the present invention, the flexible circuit board is configured to be adhered to the cover. As a preferred embodiment of the present invention, a surface of the light emitting plate of the mark portion is configured to have one or more of a designed shape, pattern, and text.

However, those skilled in the art could understand that the above preferred embodiments are merely embodiments, and the steering wheel assembly according to the present invention is not limited to the above embodiments. For example, according to actual operation conditions, those skilled in the art could configure a light-emitting portion to not include any light guide plate, or can configure the section of the flexible circuit board on which the light-emitting diode is provided to be on the bottom surface of the light guide plate.

As described above, although the exemplary embodiments of the present invention have been described with reference to the accompanying drawings in the description, the present invention is not limited to the aforementioned specific embodiments, and the protection scope of the present invention should be defined by the claims and equivalent meanings thereof.

## Claims

1. A steering wheel assembly, comprising:
a steering wheel base plate;
a safety airbag, located on the steering wheel base plate and comprising a cover and a housing, wherein the cover and the housing define a space for accommodating an airbag of the safety airbag; and
a light-emitting mark, capable of emitting light when powered on,
wherein the light-emitting mark comprises an electronic control element, a mark portion, and a flexible circuit board, the electronic control element being configured to be based on a rigid printed circuit board, the flexible circuit board being configured to have a first end connected to the electronic control element and a second end connected to the mark portion so that the electronic control element controls light emission of the mark portion by means of the flexible circuit board, and
the electronic control element being arranged in a first position in the steering wheel assembly, the mark portion being arranged in a second position in the steering wheel assembly, the second position being positioned at the cover, and the first position and the second position being spaced apart from each other by a distance.

2. The steering wheel assembly according to claim 1, wherein the first position is positioned on one of the housing, the cover, or the steering wheel base plate.

3. The steering wheel assembly according to claim 2, wherein the first position is positioned at a bottom surface of an outer side of the housing, or is positioned at an outer side surface of the cover.

4. The steering wheel assembly according to claim 3, wherein an outer side of the electronic control element is further provided with a dust cover.

5. The steering wheel assembly according to claim 4, wherein the mark portion comprises a light guide plate and a light emitting plate, wherein the light guide plate is configured to be used to uniformly emit, by means of the light emitting plate, light entering the light guide plate outwards.

6. The steering wheel assembly according to claim 5, wherein the flexible circuit board is provided with a light-emitting diode, and a section of the flexible circuit board on which the light-emitting diode is provided is arranged on a side surface of the light guide plate so as to cause light emitted by the light-emitting diode to enter the light guide plate.

7. The steering wheel assembly according to claim 6, wherein the flexible circuit board is configured to be adhered to the cover.

8. The steering wheel assembly according to claim 7, wherein the electronic control element controls one or more of a time, color, and intensity of light emission of the mark portion by means of the flexible circuit board.

9. The steering wheel assembly according to claim 8, wherein a surface of the light emitting plate of the mark portion is configured to have one or more of a designed shape, pattern, and text.
